# EUROPEAN PATENT APPLICATION

(11) **EP 4 418 016 A1**
(43) Date of publication of application: **21.08.2024**
(21) Application number: 23156611.8
(22) Date of filing: 14.02.2023
(51) Int. Cl.: G01S 17/894, G01S 17/48, G01S 7/4865, G01S 17/87

(54) **OPTICAL SENSING SYSTEM**

(71) Applicant: VoxelSensors SRL, 1190 Forest (BE)
(72) Inventor: Van Der Tempel, Ward, 3140 Keerbergen (BE); Mourad, Christian, 1332 Genval (BE); Collier, Robert, Park City UT, 84098 (US)

(57) **Abstract**

The present invention relates to an optical sensing system (1) for 3D imaging. The system (1) comprises at least one optical sensor (2'/2'') comprising a plurality of sensing units, each of said sensing unit comprising a photo detector, wherein said optical sensor further comprises a timing module comprising a plurality of timing means, wherein each of said sensing units corresponds to one of said timing means, or wherein said sensing units are grouped in groups, wherein each group of said sensing units corresponds to one of said timing means,. The system (1) further comprises at least one light source (5). The system (1) further comprises optics able to produce an image of said scene on said optical sensor. The system (1) further comprises a reading module. Each timing means is adapted to measure at least one first depth value, wherein said first depth value is mathematically related to the time between emitting a light pulse by the light source (5) and receiving said pulse by the optical sensing unit. The reading module is adapted to read said first depth value from said timing means only when the sensing unit or said group of said sensing units corresponding thereto have a positive detection status.

## Description

### TECHNICAL FIELD

The present invention relates to an optical sensing system. In particular, the present invention relates to an optical sensing system that is suitable for operating at short and long distances, and suitable to limiting occlusion.

### BACKGROUND

Optical sensing systems are used for a variety of applications. Many of these systems has an optimum performance either for short or long-distance ranges. For example, the spatial resolution for some of these systems is best for short distance range, while for other systems it is best for long distance range.

Furthermore, for optical systems that use triangulation, there is a problem of occlusion due to the presence of an object, which create blind spots for the sensors in these systems, since triangulation in these blind spots is not possible due to missing information.

There is need therefore for optical sensing systems that can work for both long and short distance ranges, as well as limit the problem of occlusion.

The present invention aims to resolve in part the problems mentioned above.

### SUMMARY OF THE INVENTION

It is an object of embodiments of the present invention to provide an optical sensing system suitable for operating in both short and long distances, and suitable to reduce or prevent the problem of occlusion. An additional objective is to create LIDAR imager capable of high spatial resolution, without the need for co-axial optical designs where both laser beam scanner and detector are continuously aligned along the same optical axis, which complicates dramatically the system design. An advantage of the current invention is to be able to avoid the co-axial design by replacing the single detector by a LIDAR imager capable of isolating the scanning beam and providing timestamp information of the photons associated to the scanning beam. The above objectives are accomplished by a system and method according to the present invention.

In a first aspect, the present invention relates to an optical sensing system for 3D imaging, comprising:
- at least one optical sensor, comprising a plurality of sensing units, each of said sensing unit comprising a photo detector, wherein said optical sensor further comprises a timing module comprising a plurality of timing means, wherein each of said sensing units correspond to one of said timing means, or wherein said sensing units (3) are grouped in groups, wherein each group of said sensing units (3) correspond to one of said timing means,
- at least one light source,
- optics able to produce an image of a scene on said optical sensor,
- a reading module,

wherein said timing module is adapted to measure at least one first depth value, wherein said first depth value is mathematically related to the time between emitting a light pulse by the light source and receiving said pulse by the optical sensor,
and wherein the reading module is adapted to read said first depth value from said timing means only when the sensing unit or said group of said sensing units corresponding thereto have a positive detection status.

It is an advantage of embodiments of the present invention that reliable detection is obtained for long distances based on time-of-flight measurement.

It is an advantage of embodiments of the present invention that the power consumption of the timing means is minimal, due to reading out the first depth value from the timing means only when the sensing unit or the group of said sensing units corresponding thereto have a positive detection i.e. not reading all timing means in the system. This also results in obtaining the first depth value in a fast manner.

It is an advantage of embodiments of the present invention that the number of timing means is reduced when the sensing units are grouped. It is an advantage of embodiments of the present invention that the detection uniformity of the timing means is improved.

It is an advantage of embodiments of the present invention that a bulky optical lens (e.g. used in LIDAR systems) is avoided.

Preferred embodiments of the first aspect of the invention comprises one or a suitable combination of more than one of the following features.

Said system is preferably adapted to calculate at least one second depth value, wherein said second depth value is calculated based on a location of a light spot of said light source by triangulation, preferably by triangulating data of said optical sensor with data of said light source or by triangulating data of at least two optical sensors. The system preferably further comprising scanning means, wherein said scanning means is adapted to scan a light beam from said light source on a scene along a trajectory. Said system preferably comprises at least two optical sensors.

It is an advantage of embodiments of the present invention that reliable detection is obtained for short distances based on said triangulation.

It is an advantage of embodiments of the present invention that depth measurement can be obtained for all the scene including the blind spots, and therefore the problem of occlusion is reduced. Considering a system with 2 sensors according to the present invention organized along a baseline, such that there is a parallax between the 2 sensors. Considering a first laser beam scanner positioned in proximity of the first sensor such that parallax is minimized between emitter (laser beam scanner) and the first sensor. In this case, there may be occlusions for the second sensor whereby the laser beam is not visible for the second sensor. Since the viewpoints of the first sensor and the emitter are almost identical, the first sensor will not experience such occlusions, as the laser beam will never be occluded. Obtaining the second depth measurement by triangulating information from the first and second sensor is not possible in the case of occlusion, since the second sensor will not perceive the laser beam when occluded. However, the first depth measurement pertaining to the time of flight obtained by the first sensor will still be available, since the first sensor, being substantially near the emitter does not experience any occlusions of the scanning laser beam.

It is an advantage of embodiments of the present invention that false detections are filtered, and noise such as ambient light is reduced or eliminated, and reliable detections are obtained, since the first and second depth value should be similar or substantially similar or equal.

Additionally, when the sensors are organized as a stereo pair or system, with at least 2 sensors, there will be at least 2 first depth values from each of the sensors, and possibly at least 2 minus 1 triangulated second depth values from each of the sensor pairings in the system, or at least 1 triangulated second depth value based on all data simultaneously. For example, in case of three sensors e.g. #1, #2, and #3, triangulation can be done between #1 and #2, #1 and #3, and finally #2 and #3, where it is possible to choose the best triangulation.

Each timing means is preferably at substantially the same position as the sensing unit or plurality of sensing units corresponding thereto. It is an advantage of embodiments of the present invention that the first and second depth value should be similar or equal and this can be imposed as a constraint in the filtering method.

Said system preferably comprises at least two light sources, wherein each of said light sources correspond to one of said optical sensors, preferably each of said light sources is at the same location as the corresponding optical sensor. It is an advantage of embodiments of the present invention that the problem of occlusion is reduced or eliminated.

The timing means is preferably comprising a time-to-analog converter (TAC), wherein said converter is adapted to output an analog value corresponding to the time between emitting said light pulse by the light source and receiving said pulse by the optical sensor.. It is an advantage of embodiments of the present invention that an accurate time-of-flight measurement is obtained. In the case where the timing means comprises TACs, it is an advantage that the timing means can be implemented with significantly reduced circuit complexity.

Preferably, depending on the distance from said optical sensor (i.e. between the optical sensor and the object at which the signal is reflected), the system is adapted to output said first depth value for longer detected distances (e.g. above a predetermined distance), and for shorter measured distances (e.g. below a predetermined distance) from said optical sensor, the system is adapted to output said second depth value; or a combination of both first and second measured depth values, where for example each value is weighted It is an advantage of embodiments of the present invention that reliable detection is obtained for both long and short distances.

Said system is adapted to determine an initial estimate of the location of the light beam on said scene based on data of said sensing units, wherein said system is adapted to determine a final estimate of the location of the light beam on said scene based on data of said light source. It is an advantage of embodiments of the present invention that low resolution optical sensor can be used to calculate a rough estimate of the location of the light beam on the scene, wherein an accurate depth value is the first depth value which is measured using time-of-flight measurement. It is an advantage of embodiments of the present invention that compact and efficient system is obtained.

In a second aspect, the present invention relates to an optical sensing system for optical sensing, comprising:
- at least one optical sensor comprising a plurality of sensing units, each of said sensing unit comprising a photo detector, wherein said optical sensor further comprises a timing module comprising a plurality of timing means,
- at least one light source
- preferably, scanning means, wherein said scanning means is adapted to scan, a light beam from said light source on a scene along a trajectory,
- optics able to produce an image of said scene on said optical sensor,

wherein said timing module is adapted to measure at least one first depth value, wherein said first depth value is based on the time between emitting a light pulse by the light source and receiving said pulse by the optical sensor,
and wherein said optical sensor is adapted to calculate at least one second depth value, wherein said second depth value is calculated by triangulation, preferably by triangulating data of said optical sensor with data of said light source or by triangulating data of at least two optical sensors.

In a third aspect, the present invention relates to a method for optical sensing, comprising the steps of:
- generating, at a first time instance, an optical signal on a scene,
- providing at least one optical sensor comprising a plurality of sensing units,
- imaging the scene on said at least one optical sensor,
- providing a timing module comprising a plurality of timing means,
- associating each sensing unit or each group of said sensing units to one timing means,
- by means of each timing means, generating a first timing value representing the time between:
   o said first time instance and detection of a first photon by the corresponding sensing unit, or
   o detection of said first photon by said corresponding sensing unit and a second time instance,
- reading out the first timing value of said timing means only when the corresponding sensing unit thereto has a positive detection status, and
- determining at least one first depth value based on said first timing value.

Preferred embodiments of the third aspect of the present invention comprises: one or a suitable combination of more than one of the following features:
- the method further comprises the step of scanning, said optical signal on said scene along a trajectory,
- the method further comprises the step of determining a location of a light spot produced by said optical signal on the scene by said optical sensor, and the step of determining at least one second depth value by said optical sensor, wherein the second depth value is calculated based on the location of the light spot by triangulation, more preferably by triangulating data of said source with data of said optical sensor or by triangulating data of two optical sensors,
- the method further comprises the step of outputting, above a predetermined distance from said optical sensor, said first depth value, and the step of outputting, below said predetermined distance from said optical sensor, said second depth value,

the method further comprises the step of determining an initial estimate of the location of the light spot based on data of said sensing units, and determining a final estimate of the location of the light spot based on data of said light source. The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The disclosure will be further illustrated by means of the following description and the appended figures.
Figure 1 (a, b, c) shows the steps according to which the system (1) operates, according to embodiments of the present invention.
Figure 2 shows an optical sensing system (1) comprising two optical sensors (2', 2") in two different configurations (a, b), according to embodiments of the present invention.
Figure 3 shows triangulation, according to embodiments of the present invention.
Figure 4 shows filtering capabilities of the system (1), according to embodiments of the present invention.
Figure 5 shows the distance (d) away from the sensors (2', 2") versus the uncertainty or noise parameter (σ_{z}), according to embodiments of the present invention.
Figure 6 shows the operation of the time-to-analog converter present in the time-of-flight sensor, according to embodiments of the present invention.
Figure 7 (a, b) shows a possible implementation of the system, according to embodiments of the present invention.
Figure 8 shows a possible implementation of the system, according to embodiments of the present invention.
Figure 9 shows a possible implementation of the system, according to embodiments of the present invention.
Fig. 10 shows a filtering mechanism on the array level.

Any reference signs in the claims shall not be construed as limiting the scope. In the different drawings, the same reference signs refer to the same or analogous elements.

### DETAILED DESCRIPTION

The present invention relates to an optical sensing system for 3D imaging.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the description provided herein, numerous specific details are set forth. However, it is understood that embodiments of the invention may be practiced without these specific details. In other instances, well-known methods, structures and techniques have not been shown in detail in order not to obscure an understanding of this description.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a contaminant" refers to one or more than one contaminant.

The recitation of numerical ranges by endpoints includes all numbers and fractions subsumed within that range, as well as the recited endpoints.

In a first aspect, the present invention relates to an optical sensing system for 3D imaging. The system comprises at least one optical sensor comprising a plurality of sensing units, each of said sensing unit comprising a photo detector. The optical sensor further comprises a timing module comprising a plurality of timing means. Each of said sensing units or each group of said sensing units correspond to one of said timing means. The system further comprises at least one (e.g. pulsed) light source. For example, a light spot (or a dot or a semi-dot or any other suitable shape), is produced by a light beam on a scene. The system further comprises optics able to produce an image of said scene on said optical sensor.

Said timing module is adapted to measure at least one first depth value, wherein said first depth value is mathematically related to (or based on) the time between emitting a light pulse by the light source and receiving said pulse by the optical sensor i.e. by measuring the time-of-flight. In other words, the first depth value may be calculated somewhere other than in the timing module, but based on the output of the timing module.

The system further comprises a reading module, wherein the reading module is adapted to read said first depth value from said timing means only when the sensing unit or plurality of sensing units corresponding thereto have been assigned a positive detection status. For example, there is filtering mechanisms (discussed in different parts of the document) distinguish between true positive detections and false positive detections. Therefore, the reading module is adapted to read said first depth value from said timing means when the sensing unit or plurality of sensing units corresponding thereto have a true positive detection. The skilled person understands how to configure the components needed to create said reading module.

In other words, after the photo detector of the sensing unit detects a photon or a predetermined number of photons e.g. once the detection status is positive, the positive detection status is subsequently evaluated to be either a true positive status or a false positive status. When the sensing unit is assigned a true positive detection status, the reading module reads the time-of-flight measurement and the first depth value. In other words, the time-of-flight measurement happens always when a photon was detected, i.e. for every positive detection status, but the reading of the time-of-flight information happens only when the sensing units associated to the timing means have been assigned a true positive detection status. This greatly reduces the power consumption of the system and dramatically increases the speed at which the measurements can be repeated, since not all the values from all of the timing means need to be read, but only the relevant ones associated to a true positive detection status. For example, in comparison, in a typical prior art LIDAR system, the time-of-flight is measured for the complete imager e.g. for each pixel in the LIDAR, and is also read for the whole imager, which is highly power consuming. In this case, however, only the time-of-flight corresponding to the relevant pixels (i.e. having the true detection) is read. Alternatively, one time-of-flight value is measured for a number of pixels, for example for a pixel and its neighboring pixels, for example every group of 9 pixels have one time-of-flight measurement. This would even further reduce the power consumption of the system, while not significantly affecting the measurement, since the time-of-flight of a group of 9 pixels is most likely substantially the same in case the probability of detecting uncorrelated ambient photons or thermal noise photons is adequately low compared to the probability of detecting an active photon, for the pixels corresponding to the location of the dot or laser beam.

Each of said sensing units correspond to one of said timing means. Alternatively, a group of said sensing units correspond to one of said timing means. The former requires many more timing means per optical sensor while the latter requires less timing means per optical sensor. While the former may be more accurate, the latter may be advantageous due to improving the detection uniformity of the timing means, since the larger the circuit components of the timing means, the more a person skilled in the art can reduce the impact of process variations and device mismatch.

Preferably, said system is adapted to calculate at least one second depth value, wherein said second depth value is calculated by triangulation. The triangulation step may happen on-chip or (e.g. after transmitting the location information from one sensor to the other, or after transmitting angular information of the illumination/emitter to at least one sensor), or off-chip (e.g. after transmitting the location information to a processing unit (host System-on-Chip or CPU or other). For example, the sensing units are adapted to locate the dot in the scene, for example they are adapted to look for events in the scene. For example, by detecting the location of the dot by the optical sensor, and triangulating said location with data of said light source. Alternatively, this can be done by detecting the location of the dot by two optical sensors e.g. by two sensing units of two optical sensors, after which said locations are triangulated. For example, by triangulating the location of the dot (x, y) from two viewpoints, the depth value (i.e. the z-value, representing the distance between the optical sensor and objects in the scene) can be calculated, and therefore (x, y, z) coordinates of the location can be calculated at each time step. In this configuration, said light source is advantageous in allowing the triangulation and determining the depth value of a field of view.

Since triangulation needs data of two viewpoints, it is prone to occlusion. For example, in case information of only one viewpoint can be obtained, for example due to an object occluding the field of view of one optical sensor, then triangulation becomes impossible. However, measuring the time between laser generation and laser reception does not require two viewpoints. Therefore, using the two techniques together allow to reduce the blind spots due to occlusion. For example, one embodiment of the invention comprises a system comprising a first sensor and a first scanning illumination located substantially close together as to minimize parallax. In this way, for the time-of-flight-based measurements, there will be no occlusion of the scanning illumination due to parallax. The system additionally comprises a second sensor and a second scanning illumination positioned at a design distance from the first sensor as to create a stereo-pair of sensors exhibiting a baseline between them. The baseline creates parallax transforming distance or depth into a disparity measurement (difference in sensed locations of the scanning dot in each of the sensor image planes), which can be used to triangulate and infer the depth through a second method (triangulation). In case of a correct detection, the two depth values obtained are ideally equal or substantially equal. This provides an additional filtering mechanism. For example, in case the two obtained depth values are not substantially equal considering the noise characteristics of each of the methods, this may be a noisy or wrong detection. Also, if the triangulation failed due to the absence of data from two view points, then the first depth value may be used.

Having two depth values allows flexibility of choosing the depth value of preference depending on the situation. For example, triangulation is more accurate for short distances, for example less than 10x the baseline, while for example time-of-flight is more accurate for long distances, for example more than 10x the baseline. Preferably, the system combines first and second depth value into a more reliable depth estimate or alternates between using the first and second depth value, as discussed further below.

Preferably, triangulation may be preceded by a filtering step, for example to reduce the number of sensing units with false detections, and only triangulate data of sensing units with a true positive detection. For example, checking the detection of the neighboring sensing units (pixels), or checking the persistence of the detections over time. This is an in-pixel filtering mechanism. Another filtering mechanisms may be also available, for example after projecting the detections on a periphery, it is possible to remove some noisy detections, since the pattern of projection is known e.g. Lissajous or the like.

Preferably, the system comprises scanning means, wherein said scanning means is adapted to scan, preferably continuously, a light beam from said light source on a scene along a trajectory. Scanning here refers to sequentially illuminating different parts of the scene using said light source.

Scanning a light beam from said light source is advantageous in allowing triangulation. For example, using a system comprising a light source emitting a light beam on a scene (e.g. an environment) and two of said optical sensors e.g. oriented differently than each other, wherein said two sensors have a shared field of view of the scene, it is possible to convert x-y-time data of the two sensors to x-y-z-time data by triangulation. For example, by adapting said light source to illuminate a light beam on said scene in an illumination trace, wherein said light source comprises means adapted to scan said light beam on said scene (preferably continuously), wherein said optical sensors monitor the light spot produced by said light beam and output locations of points of at least one object (e.g. points of surfaces of said object) in said scene along said trace at a plurality of instances, wherein the x-y-time data of the two optical sensors can be converted to x-y-z-time data using triangulation. The light source may act for example as a reference point, such that said locations of said points of said object of the first optical sensor can be triangulated with those of the second optical sensor, to create the depth or z-dimension.

Preferably, the scanning means has an angle of emission which changes in a very fast rate when said scanning means scans said scene. For example, such that a CW operation would appear as a pulsed operation. For example, said angle of emission changes in a rate comparable to the time between emitting a light pulse by the light source and receiving said pulse by the sensing unit i.e. the time of flight. For example, the scanning rate is substantially high such that the angle of emission changes with a rate comparable to the time of flight. For example, the time between changing the emission angle from one angle to the other one is comparable to the pulse length in a pulsed operation. In other words, the invention is not limited to pulsed operation, but can be generalized to CW operation, given that the scanning means scans the scene with a very fast rate, such that the angle of emission changes in a fast manner, such that it appears as if it is a pulsed operation. For example, the time the scanning means spends on each emission angle is substantially short, such that it appears as if a pulse was emitted. For example, the scanning rate of said scanning means is at least 1 MHz, preferably at least 10 MHz, thereby varying the angular output of the beam at rates relevant to time of flight detection. The scanning rate is defined as the time it takes the light beam to travel from one edge of the scene, particularly from one edge of the field of illumination, to the other edge.

In other words, the first depth value may be calculated based on the angle of the scanning means at the time of light emission, and the time elapsed since then. For example, if the scanning means is scanning at a rate of 10 MHz, and is emitting light at emission angle Θ1 at t=t₀, and the sensing unit is receiving said light emitted at t=t₁, then the first depth is calculated based on the time of flight t₁-t₀.

Preferably, each timing means is at substantially the same position as the sensing unit or plurality of sensing units corresponding thereto. This allows to reduce signal propagation delays from the relevant sensing unit(s) to the associated timing means and results in the most accurate measurement. However, the timing means can also be on the periphery of the optical sensor, and connected to the sensing units by signal busses.

This invention allows to measure the depth of the illuminated part of the scene using more than one measurement method. Since both methods are uncorrelated, the first and the second depth value obtained from the respective methods (time-of-flight and triangulation), this can also be imposed as a constraint in the filtering method. For example, in case the first and second depth value are substantially different considering the noise characteristics of each of the measurements, this is likely an incorrect detection.

This invention allows to use the capabilities of time-of-flight (e.g. better depth resolution at longer distances, and e.g. solving the problem of occlusion when combining it with triangulation) without consuming the amount of power that would be required in case the time-of-flight sensors were read over the whole imager. For example, in typical LIDAR sensors, there is an array of time-of-flight sensors, where it is needed to read the whole imager since it is not known which pixel has the true detection, which is very time and power consuming. However, using the light scanning and triangulation as described in this document allows to firstly know which pixels fired, which among these have a true detection (through filtering mechanisms), and thereafter allows to read the time-of-flight of only these pixels having a true detection, therefore reducing the power consumption, increasing the detection speed, and providing a very low latency and accurate detection.

Preferably, said system comprises at least two optical sensors. For example, wherein data of the sensing units in one optical sensor, e.g. sensing units which have a positive detection at one time stamp, are triangulated (on or off-chip) with data of the sensing units in the other optical sensor which have a positive detection at the same time stamp. For example, the location of the active signal in the scene (i.e. the location wherein the light source is shining at) is determined by one sensing unit in the first optical sensor and in one sensing unit in the second optical sensor, wherein the locations are triangulated to find the second depth value. In this case, the triangulation is done without the need for said data of said light source.

Preferably, said system comprises at least two light sources. For example, wherein each of said light sources corresponds to one of said two optical sensors, preferably wherein each of said light sources is at approximately the same location as the corresponding optical sensor (minimizing parallax). In another configuration, the system may have two scanning means, for example each scanning means corresponding to one light source, wherein each scanning means is approximately at the same location as the corresponding optical sensor. In another configuration, the system comprises one common light source, a beam splitter, and two scanning means, wherein each scanning means is at approximately the same positions as the corresponding optical sensor. This allows to further reduce or eliminate the blind spots due to occluding objects, since time-of-flight measurements can be done for each optical sensor separately. This is a further improvement to the case in which only one light source and one optical sensor are available, in which case occlusion is reduced due to time-of-flight measurements, but is not completely eliminated.

Preferably, the timing means is a time-of-flight sensor, comprising a time-to-analog converter (TAC). For example, said converter is adapted to output an analog value corresponding to the time-of-flight (i.e. the time between emitting said light pulse by the light source and receiving said pulse by the optical sensor. For example, the converter comprises a capacitive element, which charges when the light source emits the pulse, and stops charging when the pulse is received by the sensing unit. Said analog value is advantageous because it can provide accurate time-of-flight measurements. The time-to-analog converter may be replaced by a time-to-digital converter. However, it is less preferred since the time-to-digital converter would require a high-speed clock over the full imager (i.e. over the full optical sensor), which is energy consuming, especially if the size of the imager is big.

Preferably, the TAC value is only read for the pixels which have been assigned a true positive detection status meaning the active light spot has a high probability of being located during that time at those pixel, for example, read after filtering the ambient light using one of the filtering methods described in this document or in our previous patent applications PCT/EP2021/087594 and PCT/IB2022/058609. Filtering may also be done due to the fact that the illumination is done in a known pattern, for example a Lissajous pattern. A substantial part of the filtering may be applied before passing the photon detection to the timing means, meaning the timing means is triggered or enabled by a filtered version of the photon detection signal.

For example, one TAC is configured per pixel (i.e. sensing unit), or one TAC is configured per group of pixels e.g. per 4 or per 9 pixels. For example, whichever pixel fires first locks the TAC. This is advantageous in reducing the number of TACs in the system. This also can improve the detection uniformity, since the TAC would be bigger in size and therefore more uniform. A balance may need to be maintained however, since having one TAC per groups of pixels may lead to errors. For example due to locking the TAC to a pixel that has false detections.

To reduce the chance of the TAC being locked by ambient photon detections or thermal noise, the trigger signal going to the TAC/TDC may be filtered based on coincident firings of neighboring pixels, based on spatio-temporal constraints, based on historic events and historic events from neighboring pixels, past firings, ...etc.

Preferably, above a predetermined distance from said optical sensor, the system is adapted to output said first depth value, and below a predetermined distance from said optical sensor, the system is adapted to output said second depth value. For example, the system is adapted to calculate a universal depth value, wherein above a predetermined distance from said optical sensor, the universal depth value is said first depth value, and wherein below said predetermined distance from said optical sensor, the universal depth value is said second depth value. This means that, the response of the system is different depending on the distance. As shown below, the uncertainty level is different for triangulation methodology versus time-of-flight methodology, depending on the distance. For example, triangulation works best as short distances, while time-of-flight works best at long distances.

In a preferred embodiment of this invention, the optical sensor is low resolution comprising a low number of sensing units e.g. at most 1000 by 1000 pixels or at most 100 by 100 pixels. For example, the sensing units are adapted to calculate an initial estimate of the location of the light beam on said scene. Based on this initial estimate, the light source is adapted to obtain the final estimate of the location of the light beam on said scene, since it is known where the light source was shining at each time stamp. For example, only a coarse x, y location of the dot (i.e. the laser spot) can be obtained by each sensing unit. However, this may be sufficient, since the precise angular position or x, y position as seen from the light source is known from the light source. Normally precise x, y locations are needed since the difference of x, y allows to calculate the disparity, after which the depth value is calculated. However, in this case, since time-of-flight measurement is available, it can be used to calculate based thereon the first depth value. This allows to make the system compact and reduce the power consumption.

Preferably, said photo detector is a single photon detector, preferably a single photon avalanche detector. Alternatively, said photo detector is an avalanche photo detector. Using SPADs in the pixels is advantageous because it is sensitive to a single photon, which means that the active projected structure will need a minimum amount of energy since the detector is single photon sensitive. Another advantage is sub-ns response time, meaning the photon is detected and encoded into a digital signal in nanoseconds.

Preferably, each photo detector is arranged in a reverse biased configuration. Preferably, the detector is capable of detecting single photons impinging thereon. Preferably, the detector is adapted to output a logic signal e.g. an electrical detection signal upon detection of a photon. For example, a detection signal may be represented by a signal comprising logic '1' e.g. a detection, while no detection signal may be represented by a signal comprising logic '0' e.g. no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal.

Preferably, said scanning means is adapted to scan, at least partially, a light beam from said light source on said scene along a trajectory. This is advantageous in allowing triangulation and determining the depth value in a field of view. For example, said depth value can be estimated by triangulating points of said at least one object in said scene detected by said optical sensor, with data of emitted light of said at least one light source. This is similar to triangulating output of two optical sensors, since the data of the emitted light of said light source is known i.e. it is known at which part of the scene the light would be illuminated at a certain time.

Preferably, the system comprises at least one optical sensor, wherein the distance is estimated by displacement on the sensor of optical signals corresponding to points of said at least one object in said scene detected by said optical sensor, the displacement being referred to the expected position based on prior knowledge on the light source, and/or the displacement being referred to the displacement of optical signal corresponding to points of said at least one object in said scene detected by at least one other optical sensor. This is advantageous in that it is simple to obtain a distance between each object and said sensors.

Said scanning is preferably substantially continuous, such that objects in the scene are continuously scanned and identified. For example, the light source generates a light beam, which produce a light spot on an object, wherein said beam is continuously scanned on said scene along said trajectory, wherein for example after every some time, the beam would have scanned all or almost all of the scene. The reflected signal is then received by the at least one optical sensor. Scanning may be for example in a Lissajous pattern or a raster scan, or the like. The scanning means may for example be a MEMS scanner or a mirror, or an optical phase array, or meta surface approach beam scanning, or the like. The light beam itself, may be continuous or pulsed.

Preferably, the light source is adapted to be in a wavelength detectable by the optical sensor. For example, between 100 nanometer and 10 micrometer, preferably between 100 nanometer and 1 micrometer. For example, the optical sensor is a photo detector or a matrix of photo detectors that is able to detect photons impinging on each detector within a wavelength detection window falling within the range of 100 nanometer and 10 micrometer, preferably between 100 nanometer and 1 micrometer.

Preferably, the system comprises more than 100 pixel sensors, preferably more than 1,000 pixel sensors, more preferably more than 10,000 pixel sensors, even more preferably more than 100,000 pixel sensors, most preferably more than 1,000,000 pixel sensors. For example, the system may be arranged in a matrix fashion, wherein said optical sensor comprises 1,000 pixel sensor rows and 1,000 pixel sensor columns. Alternatively, the system may also operate with low resolution optical sensor, for example comprising 100 by 100 pixels. For example, said beam creates a dot on the scene, wherein said sensing units are adapted to obtain the location (x, y) of the dot. However, since the resolution is low, only a coarse (x, y) locations is obtained. However, the exact (x, y) locations can be retrieved from the light source. In this case, triangulation may not be needed, since the first depth value (by time-of-flight measurement) is sufficient.

Preferably, the system comprises image representation means, for example a screen-like or other image representation devices, so as to reproduce locations of points of said objects in said scene.

Preferably, the optical system is used for 3D vision applications. For example, the system may be used to visualize objects in three dimensions. Alternatively, said sensor may allow analyzing the scene, for example by extracting features of objects in the scene, without necessarily producing an image of said scene. Preferably, the system further comprises a plurality of optical sensors and/or a plurality of light sources. This is advantageous in creating 3D vision. For example, each optical sensor may be oriented differently, such that a 3D perception of the scene to be imaged is captured, for example by triangulating the output of two such optical sensors.

In a second aspect, the present invention relates to an optical sensing system for 3D imaging, comprising:
- at least one optical sensor comprising a plurality of sensing units, each of said sensing unit comprising a photo detector, wherein said optical sensor further comprises a timing module comprising a plurality of timing means,
- at least one light source
- preferably, scanning means, wherein said scanning means is adapted to scan, a light beam from said light source on a scene along a trajectory,
- optics able to produce an image of said scene on said optical sensor,

wherein said timing module is adapted to measure at least one first depth value, wherein said first depth value is based on the time between emitting a light pulse by the light source and receiving said pulse by the optical sensor,
and wherein said optical sensor is adapted to calculate at least one second depth value, wherein said second depth value is calculated by triangulation, preferably by triangulating data of said optical sensor with data of said light source or by triangulating data of at least two optical sensors.

Any feature of the first aspects may be as correspondingly described in the second aspects.

In a third aspect, the present invention relates to a method for optical sensing. The method comprises the step of generating, at a first time instance, an optical signal on a scene, for example producing a laser spot or dot on a scene by means of a light source. The method further comprises the step of providing at least one optical sensor, comprising a plurality of sensing units, for example as disclosed in the first aspect. The method further comprises the step of imaging the scene, by means of at least one imaging optics, on said at least one optical sensor. For example, the reflected light off the scene is received by at least one sensing unit of said plurality of sensing units of said at least one optical sensor. The method further comprises the step of providing a timing module comprising a plurality of timing means. The method further comprises the step of associating each sensing unit or each group of said sensing units to one timing means.

The method further comprises the step of: by means of each timing means, generating a first timing value representing the time between: (1) said first time instance and detection of a first photon by the corresponding sensing unit, or (2) detection of said first photon by said corresponding sensing unit and a second time instance (e.g. a clock edge), wherein the second time instance is later than the first time instance. The second option is advantageous in reducing the power consumption, since the timing means is only activated after the detection of a pulse i.e. the timing means is not activated before the detection of a pulse.

The method further comprises the step of reading out the first timing value of said timing means when the corresponding sensing unit (or group of units) thereto has a positive detection status. The method further comprises the step of determining at least one first depth value based on said first timing value i.e. based on measuring the time between generating said optical signal (e.g. by the light source) and receiving said pulse by the optical sensor.

Preferably, the method further comprises the step of scanning, preferably continuously, said light signal (e.g. from said light source) on said scene along a trajectory. Preferably, the scanning has a scanning rate (defined as the time it takes the light beam to travel from one edge of the scene to the other) of at least 1 MHz, preferably at least 10 MHz. In other words, the method comprises the step of changing the angle of emission of said scanning means in a very fast rate, such that a CW operation would appear as a pulsed operation, as described in the first aspect. Preferably, the method further comprises the step of determining a location of a light spot produced by said optical signal on the scene by said optical sensor. For example, determining at least one possible location of an active signal by said optical sensor i.e. by at least one sensing units. The method further comprises the step of determining at least one second depth value by said optical sensor, wherein the second depth value is calculated based on the location of the dot by triangulation, preferably by triangulating data of said source with data of said optical sensor or by triangulating data of two optical sensors (e.g. two sensing units of two optical sensors).

Preferably, the method further comprises the steps of outputting, above a predetermined distance from said optical sensor, said first depth value, and the step of outputting, below said predetermined distance from said optical sensor, said second depth value.

Preferably, the method further comprises the step of determining an initial estimate of the location of the dot based on data of said sensing units, and determining a final estimate of the location of the dot based on data of said light source. For example, the initial estimate is a coarse estimate, based on a low resolution optical sensor, while the final estimate is a fine estimate, based on the location of the light beam.

In a fourth aspect, the present invention relates to a method for optical sensing, comprising the steps of:
- generating a laser dot on a scene by a light source,
- receiving the reflected light off the scene by at least one sensing unit of a plurality of sensing units of at least one optical sensor,
- determining a location of the dot by said optical sensor,
- determining at least one second depth value by said optical sensor, wherein the second depth value is calculated based on the location of the dot by triangulation, more preferably by triangulating data of said source with data of said optical sensor or by triangulating data of two optical sensors,
- determining at least one first depth value, based on measuring the time between generating a light pulse by the light source and receiving said pulse by the optical sensor.

Any feature of the fourth or third aspects (method) may be as correspondingly described in the first and second aspects (system).

In a fifth aspect, the present invention relates to use of a system according to the first and second aspects, and/or a method according to the third or fourth aspects, for optical sensing.

Further characteristics and advantages of embodiments of the present invention will be described with reference to the figures. It should be noted that the invention is not restricted to the specific embodiments shown in these figures or described in the examples, but is only limited by the claims.

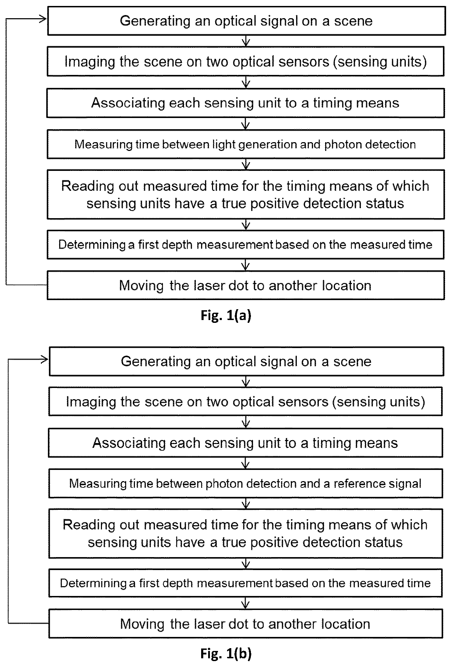

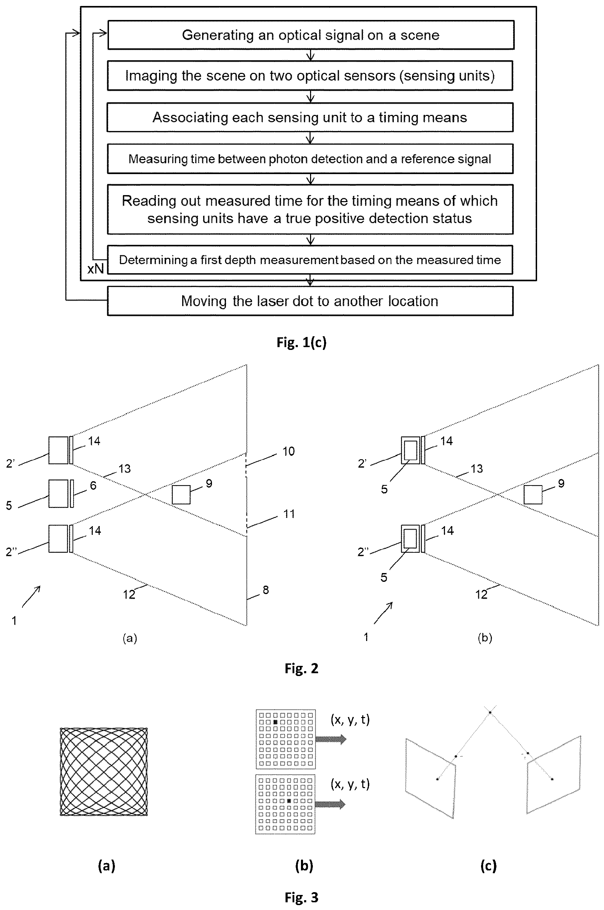

Fig. 1 shows the steps according to which the system operates, according to embodiments of the present invention. First, an optical signal is generated e.g. a laser dot is generated by illuminating a laser source on a scene. For example, an optical pulse is emitted to the scene. The light is reflected after hitting objects in the scene to two optical sensors i.e. the scene is imaged on the two optical sensors, preferably wherein each of the optical sensors comprising an array of pixels (i.e. sensing units), preferably each pixel being a single photon detector, preferably a SPAD. The light is detected by said optical sensors where the optical pulse is translated into an electrical signal or logic pulse. Each pulse is timestamped with respect to a reference clock. The detected signal is subsequently filtered, for example using temporal and neighborhood information. For example, filtering may be based on expected pulse width, expected dot projection size, past detection(s) and current detection(s) of the pixel and its neighboring pixel(s). A portion of the filtering method may be applied to the pulse before timestamping and only the filtered pulses is then processed by the timing unit (either TDC or TAC) The filtered detected signal is thereafter outputted on row and column signal busses, allowing to know the locations (i.e. the x, y coordinates) of the detection signals. This location information obtained from the plurality of sensing units is then processed to obtain filtered location information indicating with high likelihood the true location of the laser beam in the image plane. This allows triangulation between the two optical sensors, and determining a second depth value. Further filtering may be performed on the information on the row and column busses for example, filtering based on past bus information to identify pixel locations with highest likelihood of having detected photons originating from active illumination of the laser beam.

Each sensing unit is associated to a timing means, wherein each timing means calculates the time between laser generation and photon detection at the corresponding sensing unit, or in Fig. 1 (b) between the photon detection and a reference signal. This allows to determine a first depth value. This allows an extra confirmation / filtering step, since first and second depth values should be substantially the same. However, this is advantageous in situations where the second depth value cannot be obtained, due to the impossibility of performing triangulation. For example, this is advantageous in cases of occlusion e.g. in case the field of view of one sensor is occluded by an object, in which case triangulation is not possible, but the depth value can still be obtained using time-of-flight measurement i.e. the first depth value. The reading out is only done for the timing means which corresponding sensing units have a positive detection status, and based thereon said first depth value is obtained. Finally, the laser dot is moved to another location where the same steps are performed again, and the whole scene is scanned in this manner. The scanning is preferably done in a Lissajous fashion. This illumination trajectory is advantageous in allowing efficient and fast image detection, since after several illumination cycles, a significant part of the image is already illuminated. Other illumination patterns may be envisaged.

Also, in case of two time-of-flight measurements belonging to two different optical sensors and corresponding to the same object, these two measurements are substantially equal or equal at longer distances. However, even at shorter distances, the time-of-flight measurements can be corrected for the difference of optical path lengths from the light source to each of the optical sensors.

Fig. 1(c) shows a slightly different methodology, wherein determining said first depth measurement is repeated N times e.g. 8 or 10 times. This is advantageous in getting a more accurate measurement, for example by averaging the measurements. This can be achieved by two implementations. A first implementation is by shining the light into a spot, measuring the depth measurement, and doing it again N times, then moving the light to the next spot (e.g. using a scanner such as MEMS), and repeating. A second implementation is by having an array of light emitters e.g. VCSELs, wherein instead of having one light source and scanning it across the scene, the VCSELs can be turned ON at the spot at which the light is desired to be shined. For example, the light is shined by VCSEL #1, then the depth measurement is done, this being repeated for N times, after which VCSEL #2 does the same, and so on.

Fig. 2 (a) shows an optical sensing system (1) for optical sensing according to embodiments of the present invention. The system (1) comprises two optical sensors (2', 2"), wherein each sensor (2', 2") comprises a plurality of sensing units (3) and a plurality of time-of-flight units. Each of said sensing unit (3) comprises a photo detector, while said time-of-flight unit is a time-of-flight sensor (e.g. comprising a TAC). The system (1) further comprises optics (14) able to produce an image of a scene (8) on said sensors (2', 2"). The system (1) further comprises a light source (5) which illuminates a light beam that produces a light spot on a scene (4). The light source (5) in Fig. 2 (a) is shown to be in between the two sensors (2', 2"), however there can be other configurations. For example, each sensor (2', 2") may have its own light source (5) fixed at the same location as the sensor (2', 2"), as shown in Fig. 2 (b). The system (1) further comprises scanning means (6) adapted to scan said light beam on said scene (8). For example, the scanning means (6) may be a reflector or a MEMS mirror or the like, which is able to scan continuously the light beam on the scene (8), for example on different parts of the scene (8). For example, each sensor (2', 2") may have its own scanning means (6). The light beam is scanned along an illumination trajectory, for example in a Lissajous fashion. The reflected signal from the scene (8) is then captured by the sensors (2', 2").

Furthermore, Fig. 2 (a) shows an object (9) occluding the fields of view (12, 13) of the sensors (2', 2"). In this case, the object (9) occludes the field of view (12) of sensor (2") as well as occludes the field of view (13) of sensor (2'). As shown, the fields of view (12, 13) overlap. The object (9) creates a shadow or a blind spot (10) for sensor (2"), and another blind spot (11) for sensor (2'). Such blind spots (10, 11) are problematic in the absence of the time-of-flight unit, since triangulation of the blind spots (10, 11) cannot be done since they can only be seen by one sensing unit. The time-of-flight unit allows to find the depth measurements of the blind spots (10, 11). For example, in Fig. 2 (a), the time-of-flight unit in the sensor (2") allows to see the blind spot (11), and the time-of-flight unit in the sensor (2') allows to see the blind spot (10). For example, the sensor (2") sends a signal to the blind spot (11), which reflects back to the sensor (2"), and based on the time-of-flight, the depth measurement for that blind spot (11) is found. Similarly, the depth measurement for the blind spot (10) is found. Another preferred system configuration is shown in Fig. 2 (b). In this case, at the location of each sensor (2', 2"), a light source (5) and scanning means (6) are provided. In different situation, using one or another configuration may allow to have less blind spots and a better depth detection. For example, having two light sources and two optical sensors allows to eliminate the problem of occlusion in comparison to Fig. 2 (a). For example, each light source and its corresponding optical sensor allows to solve occlusion in one of the blind spots (10, 11), and the other allows to solve the other one. Having two time-of-flight sensors (i.e. one for each optical sensor) can also be advantageous in having extra filtering, since the two TOF values should be substantially similar. For example, if there is a big difference between TOF values for the two sensors, then there is likely an error.

The light source (5) projects a simple structure such as an ellipsoid or circular dot onto the scene and scans the scene in a raster, Lissajous or another pattern. Fig. 3 shows how triangulation works in the context of this invention. Each camera is adapted to track the position of the dot in each of the image planes and output a stream of (x, y, t) data where x, y are coordinates in the image plane (pixel dimension) and t is the timestamp of the detection. This is advantageous in allowing to output such streams with a temporal resolution up to 10 nanoseconds. For example, Fig. 3 shows the laser-based illumination continuously sweeps the world in fast strokes. A Lissajous pattern is generated based on a fast 2D MEMS mirror. Two or more sensors snapshot the position of the laser dot at a very fast rate (up to 100 MHz). Each sensor sends out the laser dot position, after which a simple triangulation algorithm allows to compute precise 3D shape, position, contour, and motion at said very fast rate. One advantage of this invention is the use of time-of-flight sensor in addition to triangulation, which solves a few problems as disclosed throughout the description.

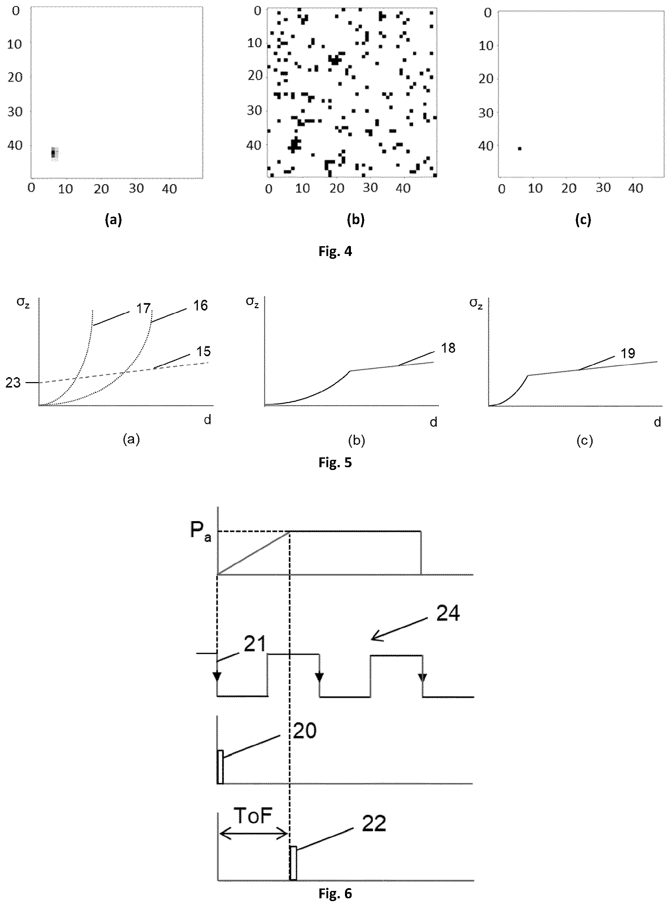

The system is able to filter out the false positives created by thermal noise and ambient light impinging on the sensor area. Fig. 4 shows (a) the ground truth, (b) raw detections, and (c) filtered detections. A first filtering step is happening inside the pixel plane, meaning this filter operates in parallel on each of the pixels. Typically, this filter exhibits either a spatial filtering method, a temporal filtering method, or a combination thereof. These filters can be implemented using transistor level, RTL, more complex compute architectures, neural networks or other.

Fig. 5 shows the distance (d) away from the sensor versus the uncertainty or noise parameter (σ_{z}), according to embodiments of the present invention, for three different scenarios (a, b, c). In (a), the distance versus uncertainty is shown for a time-of-flight sensor (15), and for triangulation with a high spatial resolution pixel array (16) and with a low spatial resolution pixel array (17). As shown, the time-of-flight sensor has a better performance (i.e. less uncertainty) at longer distances. On the other hand, triangulation remains best at shorter distances.

In triangulation measurements, the noise parameter grows with distance because of the quantization of the disparity measurement. This is because the further the distance, the smaller the disparity, and at some point the disparity becomes smaller than the size of the pixel, in which case the detection becomes inaccurate. The skilled person understands that the distance is inversely proportional to the disparity. Therefore, triangulation measurements are inaccurate for long distances (e.g. more than 10x the baseline). For example, if the disparity is smaller than the pixel, then it is not possible to measure the distance anymore. However, triangulation measurements are very accurate for short distances (e.g. less than 10x the baseline) due to the larger disparity. On the other hand, time-of-flight is better at larger distances, because it does not suffer from the disparity issue. However, it performs less good at shorter distances, due to diminishing returns on the improvement of the signal-to-noise ratio. The y-intercept value is therefore the spatial resolution (23) of the time-to-analog converter (TAC) used in the time-of-flight sensor. Therefore, this invention preferably relies on using the time-of-flight sensor at longer distances and/or in cases of occlusion, and using triangulation at longer distances.

Fig. 5 (b) shows the result of combining the response of (15) and (16), to obtain a first hybrid response (18). This shows superior performance at both long and short distance ranges. Similarly, Fig. 5 (c) shows the result of combining the response of (15) and (17). to obtain a second hybrid response (19). The responses (15, 16) depend on the resolution of the sensor (i.e. the pixel array) and on the baseline. For some applications where the pixel array needs to have a high resolution, the first hybrid response (18) is preferable, while in other cases the second hybrid response (19) may also be useful, since it would allow a very small system e.g. 100 x 100 pixel array. A low-resolution pixel array is also cheaper and consumes less power. As mentioned in the description, such low-resolution pixel array would result in coarse x, y locations of the dot, however this may be sufficient since the precise location of the dot is known from the light source. In this case, the disparity measurement need not be done since the depth value can be obtained from the time-of-flight.

Fig. 6 shows the operation of the time-to-analog converter present in the time-of-flight sensor, according to embodiments of the present invention. First, a pulse (20) is sent by a light source (5) at the falling-edge (21) of the clock signal (24), which is then reflected and received (22) by the time-of-flight sensor. The time between sending and receiving the pulse is the time-of-flight (ToF). To calculate this time, an integrating capacitor starts charging when the pulse is sent (20), and stops charging (i.e. holds the charge value) when the pulse is received (22). The time-of-flight can be calculated from the analog value at which the capacitor stops charging (Pₐ). Finally, after two clock cycles, the capacitor is read and is thereafter discharged and reset to its initial value. This information can then be converted using an analog-to-digital converter. For example, the detection and triangulation may be done in the first clock cycle, after which the value of the capacitor is read in the second or at the end of the second clock cycle. The skilled person appreciates that many other implementations can be envisaged.

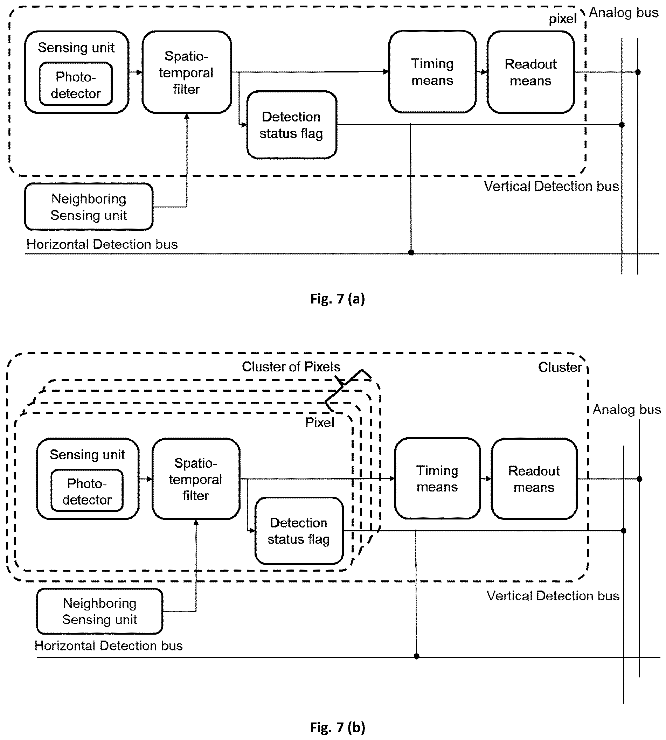

Fig. 7 (a) shows a possible implementation of the system of this invention. The pixel has a sensing unit therein, wherein the sensing unit has a photodetector. The photo detector triggers upon detection of a photon. The output of the sensing unit is filtered using a spatio-temporal filter, with the assistance of the neighboring sensing unit (i.e. checking whether the neighbors are also triggering). The output of the filter is passes to a detection status flag, which indicates whether the detection is a true or a false positive, for example based on previous information. This output also potentially triggers the timing means if the delay introduced by the filtering is minimal or systematic. This behavior is to avoid the timing means being triggered by every photon detection, regardless of the local filtering or positive detection status evaluation. After this, the readout means read out the timing means based on if the sensing unit has been associated with a high probability to the active light. Fig. 7 (b) shows the same implementation wherein a cluster of pixels is present, and wherein said cluster share one timing means.

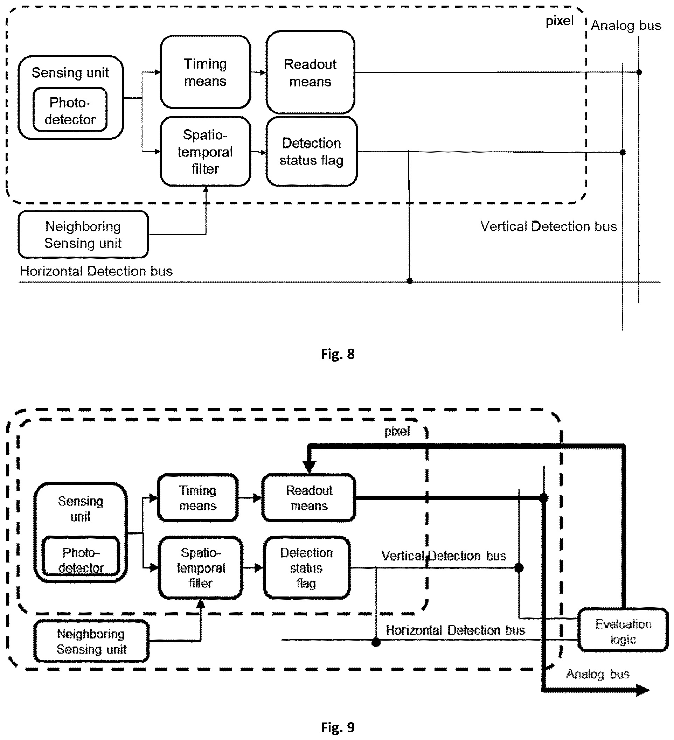

Fig. 8 shows a possible implementation of the system of this invention. This implementation is advantageous in case the filter adds a delay, which is undesirable for the timing means i.e. causes inaccurate measurement in the timing means.

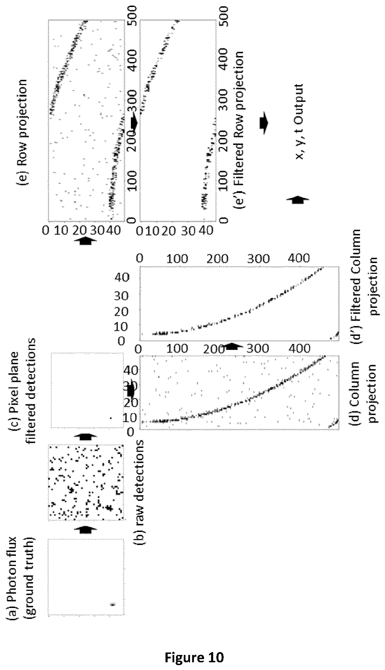

Fig. 9 shows a possible implementation of the system of this invention. A few differences can be identified with respect to the previous implementations. Firstly, an evaluation logic module is present, wherein such a module triggers the readout means to read the timing means in case this is a true positive detection. Secondly, the evaluation logic may perform additional filtering to make sure this is a true positive detection. While the previous filtering stages are on the pixel level, the evaluation logic may perform additional filtering on the array level. For example, by knowing the locations of the illuminated light, as shown in Fig. 10.

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

### LIST OF REFERENCE SIGNS

- **1**: Optical sensing system
- **2', 2"**: Two optical sensors
- **3**: Sensing unit
- **5**: Light source
- **6**: Scanning means
- **8**: Scene
- **9**: Occluding object
- **10**: Blind spot for 2"
- **11**: Blind spot for 2'
- **12**: Field of view of 2"
- **13**: Field of view of 2'
- **14**: Optics
- **15**: Distance vs. uncertainty for time-of-flight sensor
- **16**: Distance vs. uncertainty for high resolution pixel array
- **17**: Distance vs. uncertainty for low resolution pixel array
- **18**: First hybrid response
- **19**: Second hybrid response
- **20**: Emitted pulse
- **21**: Falling edge of the clock signal
- **22**: Received pulse
- **23**: Resolution of TAC
- **24**: Clock signal

## Claims

1. An optical sensing system (1) for 3D imaging, comprising:
- at least one optical sensor (2) comprising a plurality of sensing units (3), each of said sensing unit (3) comprising a photo detector, wherein said optical sensor (2) further comprises a timing module comprising a plurality of timing means, wherein each of said sensing units (3) corresponds to one of said timing means, or wherein said sensing units (3) are grouped in groups, wherein each group of said sensing units (3) corresponds to one of said timing means,
- at least one pulsed light source (5),
- optics (14) able to produce an image of a scene (8) on said optical sensor (2),
- a reading module,
wherein each timing means is adapted to measure at least one first depth value, wherein said first depth value is mathematically related to the time between emitting a light pulse by the light source (5) and receiving said pulse by the sensing unit (3),
wherein the reading module is adapted to read said first depth value from said timing means only when the sensing unit (3) or said group of said sensing units (3) corresponding thereto have a positive detection status.

2. An optical sensing system (1) according to claim 1, wherein said system (1) is adapted to calculate at least one second depth value, wherein said second depth value is calculated based on a location of a light spot of said light source (5) by triangulating data of said optical sensor (2) with data of said light source (5) or by triangulating data of at least two optical sensors (2).

3. An optical sensing system (1) according to any of the previous claims, wherein the system (1) further comprising scanning means (6), wherein said scanning means (6) is adapted to scan a light beam from said light source (5) on said scene (8) along a trajectory.

4. An optical sensing system (1) according to claim 3, wherein the scanning means (6) has a scanning rate, wherein said scanning rate is the time it takes for the light beam to travel from one edge of the scene (8) to the other edge, said scanning rate is at least 1 MHz, preferably at least 10 MHz.

5. An optical sensing system (1) according to any of the previous claims, wherein each timing means is at substantially the same position as the sensing unit (3) or plurality of sensing units (3) corresponding thereto.

6. An optical sensing system (1) according to any of the previous claims, wherein said system (1) comprises at least two optical sensors (2).

7. An optical sensing system (1) according to claim 6, wherein said system (1) comprises at least two light sources (5), wherein each of said light sources (5) corresponds to one of said two optical sensors (2), preferably each of said light sources (5) is at the same location as the corresponding optical sensor (2).

8. An optical sensing system (1) according to any of the previous claims, wherein the timing means is a time-of-flight sensor, comprising a time-to-analog converter, wherein said converter is adapted to output an analog value corresponding to the time between emitting said light pulse by the light source (5) and receiving said pulse by the optical sensor (2).

9. An optical sensing system (1) according to any of claims 2 to 8, wherein above a predetermined distance from said optical sensor (2), the system (1) is adapted to output the first depth value, and wherein below said predetermined distance from said optical sensor (2), the system (1) is adapted to output said second depth value.

10. An optical sensing system (1) according to any of claims 2 to 9, wherein said system (1) is adapted to determine an initial estimate region in said scene (8) in which the light spot is located, and wherein the system (1) is adapted to determine a final estimate region in said scene (8) in which the light spot is located based on the location at which said light source (5) is shining, wherein the final estimate region is smaller than the initial estimate region.

11. A method for 3D imaging, comprising the steps of:
- generating, at a first time instance, a light spot on a scene (8),
- providing at least one optical sensor (2) comprising a plurality of sensing units (3),
- imaging the scene (8) on said at least one optical sensor (2),
- providing a timing module comprising plurality of timing means,
- associating each sensing unit (3) to one timing means, or grouping said sensing units (3) in groups, wherein each group of said sensing units (3) is associated to one timing means,
- by means of each timing means, generating a first timing value representing the time between:
o said first time instance and detection of a first photon by the corresponding sensing unit (3), or
o detection of said first photon by said corresponding sensing unit (3) and a second time instance, wherein the second time instance is later than the first time instance,
- reading out the first timing value of said timing means only when the corresponding sensing unit (3) thereto has a positive detection status, and
- determining at least one first depth value based on said first timing value.

12. A method according to claim 11, further comprising the step of scanning a light beam generating said light spot on said scene (8) along a trajectory.

13. A method according to any of claims 11 or 12, further comprising the step of:
- determining a location of said light spot on the scene (8) by said optical sensor (2),
- determining at least one second depth value by said optical sensor (2), wherein the second depth value is calculated based on the location of the light spot by triangulation, more preferably by triangulating data of said source (5) with data of said optical sensor (2) or by triangulating data of two optical sensors (2).

14. A method according to claim 13, wherein the method further comprises the steps of outputting, above a predetermined distance from said optical sensor (2), said first depth value, and outputting, below said predetermined distance from said optical sensor (2), said second depth value.

15. A method according to any of claims 11 to 14, wherein the method further comprises the step of determining an initial estimate region in which the light spot is located, and determining a final estimate region in which the light spot is located based on the location at which said light source (5) is shining, wherein the final estimate region is smaller than the initial estimate region.
